# EUROPÄISCHE PATENTSCHRIFT

(11) **EP 3 640 758 B1**
(45) Veröffentlichungstag und Bekanntmachung des Hinweises auf die Patenterteilung: **17.02.2021**
(21) Anmeldenummer: 19202250.7
(22) Anmeldetag: 09.10.2019
(51) Int. Cl.: G05B 23/02

(54) **DIAGNOSESYSTEM UND VERFAHREN FÜR TEMPERIERVORRICHTUNGEN**
DIAGNOSTIC SYSTEM AND METHOD FOR TEMPERATURE REGULATING DEVICES
SYSTÈME DE DIAGNOSTIC ET PROCÉDÉ POUR DISPOSITIFS DE MISE EN TEMPÉRATURE

(30) Priorität: 12.10.2018 DE 102018125256
(43) Veröffentlichungstag der Anmeldung: 22.04.2020
(73) Patentinhaber: Single Holding GmbH, 73269 Hochdorf (DE)
(72) Erfinder: SPORK, Frank, 73269 Hochdorf (DE)
(74) Vertreter: Weber-Bruls, Dorothée

(56) Entgegenhaltungen:
- DE-A1-102011 108 203
- DE-A1-102016 118 136

## Beschreibung

Die Erfindung betrifft ein Diagnoseverfahren für Temperiervorrichtungen zur Temperierung von Anlagen zwecks Identifikation und/oder Lokalisierung von Fehlern in den Temperiervorrichtungen und eine solche Temperiervorrichtung zur Ausführung solch eines Diagnoseverfahrens.

Temperiersysteme oder Temperiervorrichtungen werden verwendet, um in Anlagen und/oder Prozessen eine für die erfolgreiche Durchführung von Handlungen oder Prozessen benötigte Temperatur von Maschinen, Medien oder Substanzen bereitzustellen und/oder diese prozessgerecht zu steuern. Ein beispielhaftes Einsatzgebiet für Temperiergeräte ist die Kunststoff verarbeitende Industrie und hier insbesondere der Spritzgießsektor. Für die Herstellung qualitativ konstant hochwertiger Teile sind kontrollierte Werkzeugtemperaturen zwingend erforderlich. Insofern stellt eine Temperiervorrichtung in einem solchen Prozess ein Kernbestandteil des Gesamtprozesses dar. Ein fehlerhaftes Temperiersystem kann dabei einen gesamten Produktionsprozess stoppen und verursacht daher hohe Ausfallkosten. Diese Ausfallkosten können sogar noch anwachsen, falls das Temperiergerät gegen ein funktionierendes Reservegerät ausgetauscht und stattdessen durch einen Servicetechniker repariert werden muss, der gegebenenfalls bei Einsatzgebieten in Übersee nicht umgehend lokal verfügbar ist. Das Vorhalten von Ersatzgeräten kann zwar diese Zusatzprobleme beheben, erfordert aber zusätzlichen finanziellen Aufwand durch das Vorhandensein von Ersatzgeräten.

Aus der DE 10 2008 027 039 A1 ist ein Temperiergerät mit Durchflussmessung bekannt.

Das bekannte Temperiergerät ist mit einer Pumpe zur Förderung eines Temperiermediums, einer der Pumpe nachgeordneten Druckmesseinrichtung, einer der Druckmesseinrichtung nachgeordneten Absperreinrichtung und einer Steuer- und Auswerteeinheit ausgerüstet, wobei in der Steuer- und Auswerteeinheit eine Pumpenkennlinie der Pumpe des Temperiergeräts hinterlegt ist, die eine Beziehung zwischen einem Pumpendruck des Temperiergeräts und einer Durchflussmenge des Temperiermediums wiedergibt, und die Steuer- und Auswerteeinheit derart ausgebildet ist, dass die Pumpenkennlinie kalibrierbar ist.

Die DE 10 2016 118136 A1 zeigt ein Diagnoseverfahren für eine Temperiervorrichtung (Kühlsystem) einer Anlage (Verbrennungsmotor), wobei sich ein Teil der Anlage (Wärmetauschvorrichtung) vom Kreislauf entkoppeln lässt. Allerdings erfolgt das Entkoppeln nicht zum Ausschließen von Einflüssen der Anlage auf die Messungen.

Die DE 10 2011 108203 A1 zeigt ein Verfahren zur Funktionsprüfung eines Messsystems für eine technische Anlage, wobei die Funktionsprüfung des Messsystems zunächst in einem unverbauten Zustand durchgeführt wird, das Messsystems in der technischen Anlage montiert wird, und eine zweite Funktionsprüfung des Messsystems im verbauten Zustand durchgeführt wird. Allerdings beschäftigt sich die Schrift nicht mit Temperiervorrichtungen.

Es wäre daher wünschenswert, wenn die Geräteverfügbarkeit für die Temperiervorrichtungen beim Kunden auch im Störfall einer Temperiervorrichtung auch für Gebiete mit nicht sofortiger Verfügbarkeit von Servicetechnikern hoch gehalten werden kann, ohne dafür einen Gerätepark an Ersatzgeräten vorhalten zu müssen.
Es ist somit die Aufgabe der vorliegenden Erfindung, eine Temperiervorrichtung und ein entsprechendes Verfahren bereitzustellen, mit denen eine Geräteverfügbarkeit für die Temperiervorrichtungen beim Kunden auch für Gebiete mit nicht sofortiger Verfügbarkeit von Servicetechnikern hoch gehalten werden kann, ohne dafür einen Gerätepark an Ersatzgeräten vorhalten zu müssen.
Diese Aufgabe wird durch ein Diagnoseverfahren für Temperiervorrichtungen zur Temperierung von Anlagen zwecks Identifikation und/oder Lokalisierung von Fehlern in der Temperiervorrichtung, die mit ein oder mehreren ersten Sensoren sowie ein oder mehreren weiteren Komponenten, die zur Sicherstellung des Betriebs der Anlage mit der Temperiervorrichtung vorgesehen sind, und mit ein oder mehreren zweiten Sensoren, die zur Messung des Zustands der Temperiervorrichtung und/oder der Umgebungsbedingungen um die Temperiervorrichtung herum vorgesehen sind, ausgestattet ist, umfassend nachfolgende Schritte:
- Bestimmen der Temperiervorrichtung, die mit einem Diagnoselauf überprüft werden soll;
- Entkoppeln der Temperiervorrichtung von der Anlage;
- Anschließen der Temperiervorrichtung an einen definierten Verbraucher; und
- Ausführen des Diagnoselaufs für die Temperiervorrichtung mittels eines

Diagnoseprogramms, wobei das Diagnoseprogramm die Komponenten sowie die ersten und zweiten Sensoren der Temperiervorrichtung in einer im Diagnoseprogramm hinterlegten vorbestimmten Reihenfolge überprüft, bis der Fehler in der Temperiervorrichtung identifiziert und/oder lokalisiert ist.

Temperiervorrichtungen im Sinne der vorliegenden Erfindung können beispielsweise Vorrichtungen sein, die vom zu temperierenden Medium durchlaufen werden, wobei das Medium in der Temperiervorrichtung temperiert wird. Ein solches Medium kann beispielsweise Wasser oder ein Öl sein. Die Temperiervorrichtungen umfassen beispielsweise einen hydraulischen Kreislauf, können mit oder ohne Netzwerkanschluss ausgeführt sein. Die Temperiervorrichtungen können beispielweise für Produktions- und Testprozesse verwendet werden, wie zum Beispiel in Spritzgusswerkzeugen, Extruder oder anderen Anwendungen. Komponenten der Temperiervorrichtung bezeichnen dabei alle für den Betrieb der Temperiervorrichtung vorhandene Subsysteme in der Temperiervorrichtung wie beispielweise Motoren, Aggregate, Ventile, Schalter sowie deren elektrische Versorgung etc.

Bei den Temperiervorrichtungen können schlechte Umgebungsbedingungen und/oder schlechte Geräte- oder Komponentenzustände und/oder Verschleiß zu Ausfällen führen. Durch die Verwendung von zweiten Sensoren zur Bestimmung des Gerätezustands zusätzlich zu den ersten Sensoren wird die Messdichte im Gerät erhöht, wodurch schneller und eindeutiger auf eine Fehlerquelle geschlossen werden und somit die Fehlerbehebung signifikant schneller erfolgen kann als wenn nur die üblichen prozessnotwendigen ersten Sensoren in der Temperiervorrichtung vorhanden wären. Hierbei sind die Sensoren zur Messung der Umgebungsbedingungen um die Temperiervorrichtung herum in der Regel in der Temperiervorrichtung eingebaut. Es können aber auch zweite Sensoren außerhalb der Temperiervorrichtung angeordnet und mit dieser über Datenleitunen verbunden sein. Hierbei können Sensoren lediglich als erste Sensoren und andere Sensoren lediglich als zweite Sensoren verwendet werden. In einer alternativen Ausführungsform können aber auch ein oder mehrere der Sensoren sowohl die Funktion der ersten Sensoren als auch die Funktion der zweiten Sensoren übernehmen, gegebenenfalls können diese Funktionen von dem entsprechenden Sensor auch simultan wahrgenommen werden.

Nicht alle Fehler in Umgebungsbedingungen und an der Temperiervorrichtung können zweifelsfrei im laufenden Betrieb ermittelt werden. Eine genauere Lokalisierung durch Messung und Beobachtung im laufenden Betrieb ist nicht in allen Fällen möglich, sodass in der Regel mehrere mögliche Fehlerquellen übrig bleiben. Um einem an der Temperiervorrichtung nicht speziell geschulten Bediener oder Instandhalter die Möglichkeit zu geben, im Betrieb auftretende Störfälle exakt zu identifizieren und Gegenmaßnahmen einzuleiten, wurde der erfindungsgemäße Diagnoselauf entwickelt. Dieser dient auch dazu, die Leistungsfähigkeit der Temperiervorrichtung im Vergleich zum Auslieferzustand zu bewerten.

Der Diagnoselauf soll im Störfall die vorkommende Störung präzise lokalisieren und identifizieren. Die Durchführung des Diagnoselaufs erfolgt vor Ort an der Temperiervorrichtung ohne speziell benötigte Kenntnisse über die Temperiervorrichtung. Die dadurch ermöglichte schnelle Fehlerfindung erhöht die Verfügbarkeit der Temperiervorrichtung in den Anlage, die sogenannte Up-Time beim Kunden, da schnell identifizierte und lokalisierte Fehler schneller behoben werden können und dadurch die Temperiervorrichtung wieder schneller für den Temperierprozess verfügbar gemacht werden kann. Dies ist insbesondere bei kleinen oder mittleren Kunden wichtig, da sich deren Personal vor Ort in der Regel nicht detailliert mit der Temperiertechnnik auseinander setzen kann. Dadurch werden Einsätze von eigenen Servicetechnikern zur Behebung von Fehlern zum Teil vermieden, was gerade bei weltweit vertriebenen Temperieranlagen einen großen Zeitvorteil für den Kunden bietet und zusätzlich die Geräteverfügbarkeit erhöht. Die Entkopplung der Temperiervorrichtung von der Anlage (Verbraucher) schließt die Einflüsse des Verbrauchers auf die Messungen aus wie beispielsweise bei geringen Undichtigkeiten, wo nicht klar ist, ob diese durch die Anlage verursacht sind oder in der Temperiervorrichtung liegen. Nach Anschluss an einen definierten Verbraucher kann die Temperiervorrichtung analog zum Betrieb in der Anlage im laufenden Betrieb getestet werden, wobei alle Fehlerbeobachtungen nun auf die Temperiervorrichtung alleine bezogen werden können. Mit den zweiten Sensoren können Drücke, Durchflüsse, Temperaturen, binäre Zustände von Schaltern und Ventilen und gegebenenfalls andere Parameter in der Temperiervorrichtung gemessen werden, deren Messwerte alleine durch die ersten Sensoren nicht zugänglich wären. Durch die Trennung der Temperiervorrichtung vom Prozess und der damit verbundene Ausschluss prozessseitiger Einflüsse ermöglicht es zusammen mit dem Diagnoselauf und den speziell zur Fehlerfindung eingesetzten zweiten Sensoren beispielsweise bis zu 90% oder gar mehr der hydraulischen Fehler eindeutig zu identifizieren. Zu diesem Zweck misst der Diagnoseverlauf auch den Zustand der Temperiervorrichtung gegen entsprechende Referenzwerte im Auslieferzustand, die beispielsweise in einer Diagnoseeinheit zur Ausführung des Diagnoseprogramms in der jeweiligen Temperiervorrichtung gespeichert sind.

Das erfindungsgemäße Verfahren ermöglicht es, eine Geräteverfügbarkeit für die Temperiervorrichtungen beim Kunden auch für Gebiete mit nicht sofortiger Verfügbarkeit von Servicetechnikern hochzuhalten, ohne dafür einen Gerätepark an Ersatzgeräten vorhalten zu müssen.

In einer Ausführungsform umfasst der Schritt des Ausführens des Diagnoselaufs den zusätzlichen Schritt des Überprüfen und/oder Kalibrierens zumindest der zweiten Sensoren auf ihre korrekte Funktion hin. Die Funktionsprüfung der Sensoren und deren Kalibrierung vor Ausführung des Diagnoselaufs verbessert die Qualität der Messungen während des Diagnoselaufs und damit die Zuverlässigkeit und Qualität der Ergebnisse des Diagnoselaufs. In einer bevorzugten Ausführungsform wird daher erst nach erfolgter Überprüfung und Kalibrierung ein Messen von Messwerten zumindest mit den zweiten Sensoren zur Beurteilung eines Zustands der Komponenten der Temperiervorrichtung ausgeführt.

In einer weiteren Ausführungsform werden die voranstehenden Schritte, insbesondere die Kalibrierung, auch für die ersten Sensoren durchgeführt. Da Fehler auch von eine nicht korrekten Funktion der ersten Sensoren herrühren können, verbessert die Einbeziehung der ersten Sensoren und die Überprüfung, Kalibrierung und Generierung von Messwerten die Wirksamkeit des Diagnoselaufs zur Lokalisierung und Identifikation von Fehlern in der Temperiervorrichtung, die einen korrekten Betrieb erschweren oder verhindern.

In einer weiteren Ausführungsform wird die Temperiervorrichtung von einem zu temperierenden Medium durchlaufen, wobei die zweiten Sensoren zumindest ein oder mehrere Temperatursensoren zur Bestimmung einer Motortemperatur, einer Kühlwasserablauf- und/oder Kühlwasserzulauftemperatur, ein oder mehrere Sensoren zur Messung einer Temperatur an einer beheizten Oberfläche (Filmtemperatur) der elektrischen Heizung, ein oder mehrere Drucksensoren zur Bestimmung eines Fülldrucks, eines Kühlwasser-Differenzialdrucks und/oder für eines Differentialdrucks am Schmutzfänger der Temperiervorrichtung umfassen. Die Anzahl und lokale Anordnung der zweiten Sensoren erhöht signifikant die Messdichte in der Temperiervorrichtung und erleichtert somit die Fehlerfindung. Der Diagnoselauf kann die durch die zweiten Sensoren gemessenen spezifischen Daten oder eine Kombination der Daten zur Fehlerfindung verwenden.

Ein Motortemperatursensor misst die Motortemperatur der Pumpe: Diese wird gemessen und mit einem Grenzwert verglichen. Bei Überschreitung wird ein Alarm ausgelöst. Ursache kann ein Defekt an dem Motor sein, oder auch eine zu hohe Umgebungstemperatur oder eine zu schlechte Luftzufuhr zum Pumpenmotor, beispielweise durch zu enges Stellen der Geräte.

Der Temperatursensor-Kühlwasserzufluss misst die Kühlwasserzulauftemperatur. Der Wert kann im Laufe der Zeit durch eine schwankende Temperatur je nach Außentemperatur im Jahresverlauf schwanken. Durch Beobachtung dieser Werte und dem Setzen von Grenzwerten kann rechtzeitig auf eine nicht ausreichende Kühlwassertemperatur reagiert werden.

Der Temperatursensor-Kühlwasserabfluss misst die Kühlwasserablauftemperatur: Mit Hilfe des Temperaturwertes Kühlwasserzufluss kann eine Differenztemperatur zwischen Zufluss und Abfluss gemessen werden. Im Kühlmodus der Temperiervorrichtung muss die Kühlwasserabflusstemperatur höher sein als der Zufluss. Falls der Abfluss nicht erhöht ist, ist das ein Indikator für ein nicht öffnendes Kühlwasserventil. Eine zu starke Erhöhung lässt auf einen zu geringen Kühlwasserdurchfluss und damit auf eine Verschmutzung des Wärmetauschers schließen.

Die Messung der Temperatur an der beheizten Oberfläche (Filmtemperatur) der elektrischen Heizung ermöglicht, eine Temperaturdifferenz zwischen der Heizungsoberfläche und der Vorlauftemperatur des Heizmediums zu bilden. Eine zu große Temperaturdifferenz lässt auf einen Belag auf der beheizten Oberfläche schließen, beispielweise eine Verkalkung, der entfernt werden müsste.

Ein Drucksensor zur Bestimmung eines Fülldrucks misst den Befülldruck. Falls der Wert zu niedrig ist, ist der Befülldruck für Druckwassergeräte (hier die Temperiervorrichtung) möglicherweise zu niedrig. Druckwassergeräte haben eine interne Drucküberlagerung, um das Wasser im System flüssig zu halten. Ist der Systemdruck höher als der Befülldruck, gelingt der Befüllvorgang nicht mehr. Hier kann der Bediener auf den zu geringen Druck hingewiesen werden. Das komplette Fehlen des Druckes deutet auf einen fehlerhaften Anschluss hin (Versorgung fehlt). Des Weiteren muss bei einem Öffnen des Ventils der Befülldruck abfallen, insbesondere bei niedrigen Temperaturen. Die ist dadurch bedingt, dass der Behälterdruck entweder null oder sehr gering ist. Ist kein Druckabfall feststellbar, ist das ein Indikator für ein festsitzendes Befüllventil.

Der Kühlwasser-Differenzialdruck-Sensor misst den Kühlwasser-Differenzialdruck. Die Kühlleistung einer Temperiervorrichtung hängt substantiell von der Druckdifferenz zwischen Kühlwasserzufluss und Kühlwasserabfluss ab. Der Wert kann auch im Zeitverlauf durch das Zuschalten von weiteren Verbrauchern an einer Kühlwasserversorgung schwanken. Falls der Wert im abgeschalteten Zustand zu niedrig ist, ist die Druckdifferenz möglicherweise zu niedrig und das System hat nicht die erforderliche Kühlleistung. Hier kann der Bediener auf den zu geringen Druck hingewiesen werden. Das komplette Fehlen der Druckdifferenz deutet auf einen fehlerhaften Anschluss hin (Versorgung fehlt). Des Weiteren muss bei einem Öffnen des Ventils der Differenzdruck abfallen. Das ist dadurch bedingt, dass durch das Öffnen eine Verbindung zwischen Zu- und Abfluss hergestellt wird und damit das Kühlwasser fließt. Damit fällt ein Teil des Druckes in den Versorgungsleitungen und dem Schmutzfänger ab, d.h. die zu messende Druckdifferenz wird niedriger. Ist beim Öffnen keine Druckdifferenz erkennbar, ist dies ein Indikator für ein festsitzendes Ventil. Ist der Druckabfall wiederum sehr hoch, sind die Druckabfälle in der Versorgung und im Schmutzfilter relativ groß, entsprechend sind diese Einrichtungen zu kontrollieren.

Alle diese Sensorfunktionen werden erst durch die zweiten Sensoren bereitgestellt. Die sonst nur üblicherweise vorhandenen ersten Sensoren zur Sicherstellung des Betriebs der Anlage mit der Temperiervorrichtung sind nicht in der Lage, die obigen Messergebnisse zu produzieren und können daher auch nicht bei der Fehleridentifikation wie oben beschrieben beitragen.

In einer weiteren Ausführungsform wird vor Ausführung des Diagnoselaufs die Temperiervorrichtung abgekühlt und/oder entleert. Durch Abkühlen und Entleeren wird die Temperiervorrichtung in einen definierten Zustand gebracht, wodurch der Diagnoselauf anschließend mit definierten bekannten Rahmenbedingungen durchgeführt werden kann. Der Ausschluss Undefinierter Anfangsbedingungen erhöht die Zuverlässigkeit der Ergebnisse des Diagnoselaufs. Vorzugsweise erfolgte das Abkühlen dabei bis auf Raumtemperatur, um ein Temperaturgleichgewicht mit der Umgebung herzustellen.

In einer weiteren Ausführungsform wird ein erster Teil des Diagnoselaufs im entleerten Zustand der Temperiervorrichtung durchgeführt. Dadurch werden die möglicherweise zu detektierenden Fehler separiert in mögliche Fehler, die nur im befüllten Zustand auftreten und solche, die unabhängig von einer Befüllung auftreten. Daher können bereits eine Anzahl an möglichen Fehlern vor der Befüllung geprüft und gegebenenfalls identifiziert oder ausgeschlossen werden, was die Diagnosetätigkeit im befüllten Zustand vereinfacht.

In einer weiteren Ausführungsform wird die Temperiervorrichtung von einem zu temperierenden Medium durchlaufen, wobei der erster Teil eine oder mehrere Messungen oder Einstellungen von Parametern aus einer Gruppe an Parametern umfassend Temperatur, Signaldurchgang an zweite und/oder erste Sensoren, Schalterstellungen von Schaltern und Ventilen, Kühlwasserdifferenzdruck, Befülldruck, Systemdruck vor Befüllung und/oder ungewollt einsetzender Befüllprozess in der Temperiervorrichtung umfasst. Durch die Messung dieser Daten werden die bereits voranstehend beschriebenen Schlussfolgerungen ermöglicht, wobei der Diagnoselauf im entleerten Zustand die Separation von Fehlerquellen zur besseren Lokalisierung von Fehlern ermöglicht.

In einer weiteren Ausführungsform wird ein zweiter Teil des Diagnoselaufs im befüllten Zustand der Temperiervorrichtung durchgeführt. Hierbei können die bereits im entleerten Zustand getesteten Funktionen als nicht-fehlerhaft vorausgesetzt werden, sodass die Fehlerfindung für den zweiten Teil des Diagnoselaufs vereinfacht ist. Der weitere Diagnoselauf im befüllten Zustand und die damit verbundenen Separation von Fehlerquellen im befüllten und entleerten Zustand erleichtert die Lokalisierung von Fehlern.

In einer weiteren Ausführungsform umfasst der zweite Teil des Diagnoselaufs zumindest einen oder mehrere der nachfolgenden Schritte:
- Befüllen der Temperiervorrichtung mit einem Medium, vorzugsweise Wasser oder Öl;
- Überprüfen eines Kühlkreislaufs der Temperiervorrichtung;
- Überprüfen einer Heizleistung der Temperiervorrichtung;
- Überprüfen einer Dichtigkeit der Temperiervorrichtung;
- Überprüfen einer Kühlleistung der Temperiervorrichtung.
- Überprüfen einer Pumpenleistung der Temperiervorrichtung.

Die obige stufenweise Prüfung von möglichen Fehlerquellen stellt ein sehr effektives Verfahren zur Identifikation und Lokalisierung der Fehlerquellen dar. Die obigen Prüfschritte können dabei in obiger Reihenfolge oder in einer anderen sinnvollen Reihenfolge ausgeführt werden.

In einer weiteren Ausführungsform umfasst der zweite Teil eine oder mehrere Messungen oder Einstellungen von Parametern aus einer Gruppe an Parametern umfassend Temperatur, Schalterstellungen von Schaltern und Ventilen, Befülldruck, Systemdruck während oder nach Befüllung, Befüllzeitdauer, Pumpenstatus, Ansteuerung Wasserwechsel, Leistung und dT-Regelung, Durchfluss, Heizleistung, Kühlleistung in der Temperiervorrichtung. Durch die Messung dieser Daten werden die bereits voranstehend beschriebenen Schlussfolgerungen ermöglicht, wobei der Diagnoselauf im entleerten Zustand die Separation von Fehlerquellen zur besseren Lokalisierung von Fehlern ermöglicht.

In einer weiteren Ausführungsform wird das Anschließen der Temperiervorrichtung an den definierten Verbraucher durch Anschließen von Ausgang und Eingang in die Temperiervorrichtung mittels eines den Ausgang und den Eingang kurzschließenden Schlauchs durchgeführt. Dieser definierte Verbraucher ist einfach zu montieren, benötigt die wenigsten Teile für eine Montage und bildet die geringste zusätzliche Fehlerquelle beim Diagnoselauf selber.

In einer weiteren Ausführungsform wird vor dem Anschließen der Temperiervorrichtung an den definierten Verbraucher eine Reinigung aller Schmutzfilter der Temperiervorrichtung durchgeführt. Hierdurch wird ein verstopfter Filter als Fehler ausgeschlossen und der Anfangszustand für den Diagnoselauf zusätzlich definiert. Möglicherweise kann hiermit der Fehler bereits identifiziert werden, wenn der Diagnoselauf nach Reinigung unauffällig verläuft.

In einer weiteren Ausführungsform startet die Temperiervorrichtung den Diagnoselauf automatisch nach Anschluss des definierten Verbrauchers. Dadurch wird die Handhabung bei der Ausführung des Diagnoselaufs vereinfacht.

In einer weiteren Ausführungsform umfasst das Diagnoseverfahren die weiteren Schritte des Behebens der identifizierten und lokalisierten Fehler und des Einbauens der Temperiervorrichtung in die Anlage. Damit ist die Anlage wieder betriebsbereit.

Die Erfindung betrifft des Weiteren eine Temperiervorrichtung zur Temperierung von Anlagen, umfassend
- ein oder mehrere erste Sensoren sowie ein oder mehrere weitere Komponenten, die zur Sicherstellung des Betriebs der Anlage (20) mit der Temperiervorrichtung vorgesehen sind,
- ein oder mehrere zweite Sensoren, die zur Messung des Zustands der Temperiervorrichtung und/oder der Umgebungsbedingungen um die Temperiervorrichtung herum vorgesehen sind, und
- eine Diagnoseeinheit.

Hierbei ist ein Diagnoseprogramm bereits auf der Diagnoseeinheit installiert oder mittels eines externen Datenträgers (Speicherstick, CR-ROM etc.) über eine entsprechende Schnittstelle in der Temperiervorrichtung, beispielsweise eine USB-Schnittstelle, in die Diagnoseeinheit hochgeladen. Alternative kann die Temperiervorrichtung eine WLAN-Schnittstelle oder einen Internetanschluss umfassen, über den das Diagnoseprogramm auf die Diagnoseeinheit hochgeladen oder als Web-Anwendung über diese ausgeführt werden kann.

Die erfindungsgemäße Temperiervorrichtung ermöglicht es, eine Geräteverfügbarkeit für die Temperiervorrichtungen beim Kunden auch für Gebiete mit nicht sofortiger Verfügbarkeit von Servicetechnikern hochzuhalten, ohne dafür einen Gerätepark an Ersatzgeräten vorhalten zu müssen.

Bei der erfindungsgemäßen Temperiervorrichtung ist auf der Diagnoseeinheit ein Diagnoseprogramm zur Ausführung des Diagnoseverfahrens lauffähig installiert, wobei die Temperiervorrichtung dazu ausgestaltet ist, dass das Diagnoseprogramm zumindest auf die ersten Sensoren und gegebenenfalls die weiteren Komponenten zugreifen und in einer im Diagnoseprogramm hinterlegten vorbestimmten Reihenfolge überprüfen kann, bis der Fehler in der Temperiervorrichtung identifiziert und/oder lokalisiert ist. Durch das bereits auf der Diagnoseeinheit lauffähig installierte Diagnoseprogramm wird sichergestellt, dass der Diagnoselauf mittels des Diagnoseprogramms jederzeit ohne Rücksicht auf die externen Bedingungen wie Verfügbarkeit einer Internetverbindung, Verfügbarkeit eines Datenträgers und des für die jeweilige Temperiervorrichtung geeigneten Diagnoseprogramms durchgeführt werden kann. Durch die Installation des Diagnoseprogramms auf die individuelle Temperiervorrichtung wird zudem sichergestellt, dass das Diagnoseprogramm auf die jeweilige Temperiervorrichtung optimiert ist und ohne weitere Benutzerhandlungen (hochladen, installieren, etc.) direkt ausgeführt werden kann, was die Fehleridentifikation erleichtert und keine besonderen Benutzerkenntnisse (welches Programm ist für welche Temperiervorrichtung geeignet etc.) voraussetzt. In einer Ausführungsform können die Diagnoseeinrichtung und damit das Diagnoseprogramm ebenfalls auf die ersten Sensoren zugreifen. Erste und zweite Sensoren sowie die weiteren Komponenten der Temperiervorrichtung sind auf geeignete Weise mit der Diagnoseeinheit verbunden. Beispielweise kann die Steuereinheit der Temperiervorrichtung die Diagnoseeinheit umfassen.

In einer weiteren Ausführungsform der Temperiervorrichtung umfasst diese einen Medieneingang und einen Medienausgang, um von einem zu temperierenden Medium durchlaufen werden zu können. Der Anschluss der Temperiervorrichtung an eine Medienversorgung ermöglicht, unkompliziert einen definierten Verbraucher für den Diagnoselauf zur Erleichterung der Fehlersuche anzuschließen. Solche Medien zum Temperieren sind beispielsweise Wasser oder Öle.

In einer weiteren Ausführungsform der Temperiervorrichtung umfassen die zweiten Sensoren zumindest ein oder mehrere Temperatursensoren zur Bestimmung einer Motortemperatur, einer Kühlwasserausgangs- und/oder Kühlwasserzulauftemperatur, ein oder mehrere Sensoren zur Messung einer Temperatur an einer beheizten Oberfläche, ein oder mehrere Drucksensoren zur Bestimmung eines Fülldrucks, eines Kühlwasser-Differenzialdrucks und/oder für eines Differentialdrucks am Schmutzfänger der Temperiervorrichtung.

Nachfolgend werden bevorzugte Ausführungsformen der vorliegenden Erfindung unter Bezug auf schematische Zeichnungen beispielhaft näher erläutert, in denen
- Fig. 1: eine Ausführungsform des erfindungsgemäßen Diagnoseverfahrens;
- Fig. 2: eine Ausführungsform des Diagnoselaufs des erfindungsgemäßen Diagnoseverfahrens; und
- Fig. 3: eine schematische Ansicht einer Ausführungsform der erfindungsgemäßen Temperiervorrichtung (a) eingebaut in eine Anlage, und (b) entkoppelt von der Anlage zur Durchführung des Diagnoselaufs,
zeigt. Auch wenn nachfolgend die Ausführungsformen anhand eines Außenspiegels erläutert werden, kann die zugrundlegende Erfindung auch in anderen Bereichen und Bauteilen eingesetzt werden.

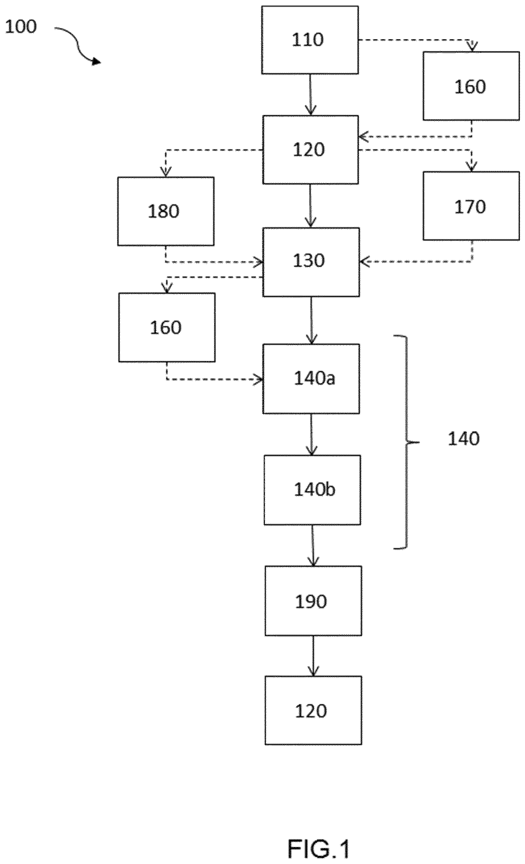

Figur 1 zeigt eine Ausführungsform des erfindungsgemäßen Diagnoseverfahrens 100 für Temperiervorrichtungen 10 zur Identifikation und/oder Lokalisierung von Fehlern in der Temperiervorrichtung. Hierbei ist die Temperiervorrichtung 10 mit ein oder mehreren ersten Sensoren 1 sowie ein oder mehreren weiteren Komponenten 3, die zur Sicherstellung des Betriebs der Anlage 20 mit der Temperiervorrichtung 10 vorgesehen sind, und mit ein oder mehreren zweiten Sensoren 2, die zur Messung des Zustands der Temperiervorrichtung 10 und/oder der Umgebungsbedingungen um die Temperiervorrichtung 10 herum vorgesehen sind, ausgestattet und wird von einem zu temperierenden Medium durchlaufen. Die Temperiervorrichtung 10 ist dabei nicht notwendigerweise integraler Bestandteil der zu temperierenden Anlage 20, sondern separat zur Anlage 20 daneben stehen und mit hydraulischen Verbindungen (Schläuche, Rohre) an die Anlage 20 angeschlossen sein. Hierbei umfasst das Diagnoseverfahren 100 die nachfolgenden Schritte des Bestimmens 110 der Temperiervorrichtung 10, die mit einem Diagnoselauf überprüft werden soll. Die Temperiervorrichtung kann dadurch bestimmt werden, dass sie ein fehlerhaftes Verhalten zeigt oder dass für sie eine Überprüfung aufgrund eines anstehenden Wartungsintervalls ansteht. Daraufhin wird die Temperiervorrichtung 10 von der Anlage 20 entkoppelt 120 gefolgt vom Anschließen 130 der Temperiervorrichtung 10 an einen definierten Verbraucher 30, das beispielsweise durch Anschließen von Ausgang und Eingang der Temperiervorrichtung mittels eines den Ausgang und den Eingang kurzschließenden Schlauchs durchgeführt wird, wobei vor dem Anschließen 130 der Temperiervorrichtung 10 an den definierten Verbraucher 30 eine Reinigung 180 alle Schmutzfilter der Temperiervorrichtung 10 durchgeführt werden kann. Hierbei kann vor Ausführung des Diagnoselaufs 140 die Temperiervorrichtung 10 abgekühlt 160 und/oder entleert 170 werden, vorzugsweise erfolgte das Abkühlen 160 bis auf Raumtemperatur. Das Abkühlen 160 kann aber auch direkt nach dem Schritt 110 erfolgen, damit in den nachfolgenden Schritten nicht mit einem heißen Medium umgegangen werden muss. Danach erfolgt das Ausführen 140 des Diagnoselaufs für die Temperiervorrichtung 10 mittels eines Diagnoseprogramms 5, das automatisch nach Anschluss des definierten Verbraucher 30 von der Temperiervorrichtung 10 gestartet werden kann, wobei das Diagnoseprogramm 5 die Komponenten 3 sowie die ersten und zweiten Sensoren 1, 2 der Temperiervorrichtung 10 in einer im Diagnoseprogramm 5 hinterlegten vorbestimmten Reihenfolge überprüft, bis der oder die Fehler in der Temperiervorrichtung 10 identifiziert und/oder lokalisiert sind. Die zweiten Sensoren 2 umfassen dazu zumindest ein oder mehrere Temperatursensoren zur Bestimmung einer Motortemperatur, einer Kühlwasserablauf- und/oder Kühlwasserzulauftemperatur, ein oder mehrere Sensoren zur Messung einer Temperatur an einer beheizten Oberfläche, ein oder mehrere Drucksensoren zur Bestimmung eines Fülldrucks, eines Kühlwasser-Differenzialdrucks und/oder für eines Differentialdrucks am Schmutzfänger der Temperiervorrichtung 10. Hierbei kann das Diagnoseverfahren 100 einen ersten Teil 140a umfassen, der im entleerten Zustand der Temperiervorrichtung 10 durchgeführt wird, wobei der erster Teil 140a eine oder mehrere Messungen oder Einstellungen von Parametern aus einer Gruppe an Parametern umfassend Temperatur, Signaldurchgang an zweite und/oder erste Sensoren 1, 2, Schalterstellungen von Schaltern und Ventilen, Kühlwasserdifferenzdruck, Befülldruck, Systemdruck vor Befüllung und/oder ungewollt einsetzender Befüllprozess in der Temperiervorrichtung 10 umfasst. Das Diagnoseverfahren kann des Weiteren einen zweiten Teil 140b umfassen, der im befüllten Zustand der Temperiervorrichtung 10 durchgeführt wird, wobei der zweite Teil 140b eine oder mehrere Messungen oder Einstellungen von Parametern aus einer Gruppe an Parametern umfassend Temperatur, Schalterstellungen von Schaltern und Ventilen, Befülldruck, Systemdruck während oder nach Befüllung, Befüllzeitdauer, Pumpenstatus, Ansteuerung Wasserwechsel, Leistung und dT-Regelung, Durchfluss, Heizleistung, Kühlleistung in der Temperiervorrichtung 10 umfasst. Der Diagnoseprogramm gibt während des Diagnoselaufs 140 bei festgestellten Fehlern entsprechende Hinweise an den Bediener zur Fehlerbehebung. Nach Identifikation und Lokalisierung des oder der Fehler können diese behoben (190) und die Temperiervorrichtung 10 erneut in die Anlage 20 eingebaut 200 werden.

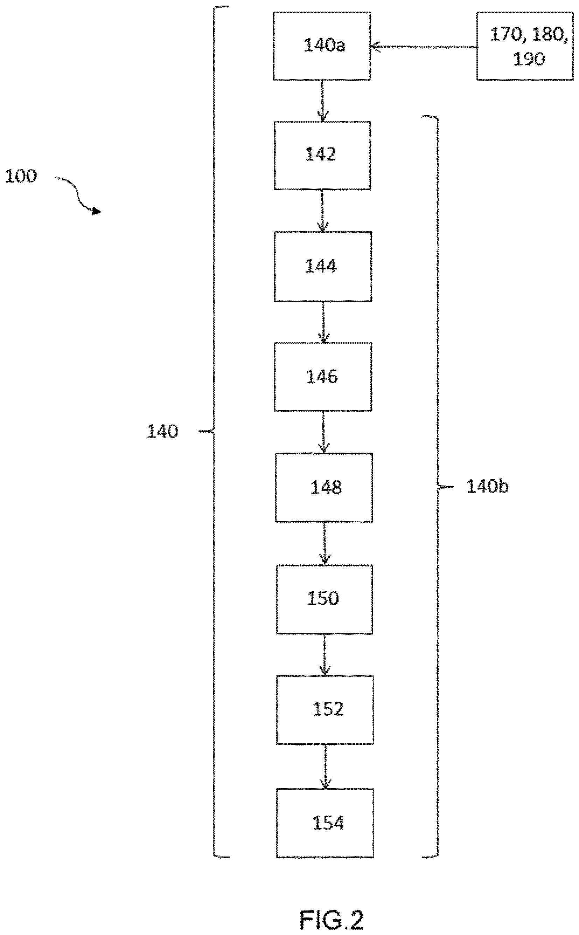

Fig. 2 zeigt eine Ausführungsform des Diagnoselaufs 140 des erfindungsgemäßen Diagnoseverfahrens 100 umfassend die nachfolgenden Schritte des Befüllens 142 der Temperiervorrichtung 10 mit einem Medium, vorzugsweise Wasser oder Öl, wobei beim Befüllen die Dichtigkeit und die anliegenden Drücke gemessen, die entsprechenden Schalter (wie Schwimmschalter) getestet und bewertet werden können, gefolgt von dem Überprüfen und/oder Kalibrieren 144 zumindest der zweiten Sensoren 2 auf ihre korrekte Funktion hin, damit ein Messen von Messwerten 146, 148, 150, 152 zumindest mit den zweiten Sensoren zur Beurteilung eines Zustands der Komponenten 3 der Temperiervorrichtung 10 mit großer Zuverlässigkeit ausgeführt werden kann. Des Weiteren erfolgt nun das Überprüfen 146 des Kühlkreislaufs 3 der Temperiervorrichtung 10 mittels Öffnen des Kühlwasserventils, Messung des Druckabfalls und des Differenzdrucks bei offenem Ventil. Ist der Druckabfall hoch, so können die Zuleitung und/oder der Schmutzfänger verstopft sein. Ist der Druckabfall nicht messbar, könnten die Ventile nicht öffnen oder anderweitig defekt sein, sodass eine Reinigung oder ein Tausch vorgenommen werden sollte. Die Prüfung umfasst daher eine Ventilfunktionsüberprüfung aller beteiligten Ventile. Ist der Druckabfall niedrig, so könnten der Wärmetauscher auf der Kühlwasserseite verschmutzt sein. Das Überprüfen 148 der Heizleistung der Temperiervorrichtung 10 erfolgt mit eingeschalteter Heizung. Ist der Temperaturanstieg zu gering, so könnte der Heizstab verschmutzt oder defekt sein. Hier kann ebenso die Dichtigkeit des Systems und die Funktionalität der Ventile und Schalter geprüft 150 werden. Das Überprüfen 152 der Kühlleistung der Temperiervorrichtung 10 erfolgt über die Zeit, wobei eine zu geringe Abkühlung auf einen verschmutzten Wärmetauscher hindeuten kann. Das Überprüfen 154 einer Pumpenleistung der Temperiervorrichtung 10 erfolgt über die Zeit, wobei eine zu geringe Pumpenleistung auf verschmutzte Zu- und Ableitungen oder eine defekte Pumpe hindeuten kann. Voranstehende Schritte können auch unter Zuhilfenahme der ersten Sensoren 1 durchgeführt werden. Nach der erfolgten Durchführung des Diagnoselaufs wird die Temperiervorrichtung wieder entleert, der definierte Verbraucher entkoppelt und die Temperiervorrichtung gegebenenfalls noch einmal gespült. Ist sie wieder funktionstüchtig, kann sie nun wieder in die Anlage 20 eingebaut werden.

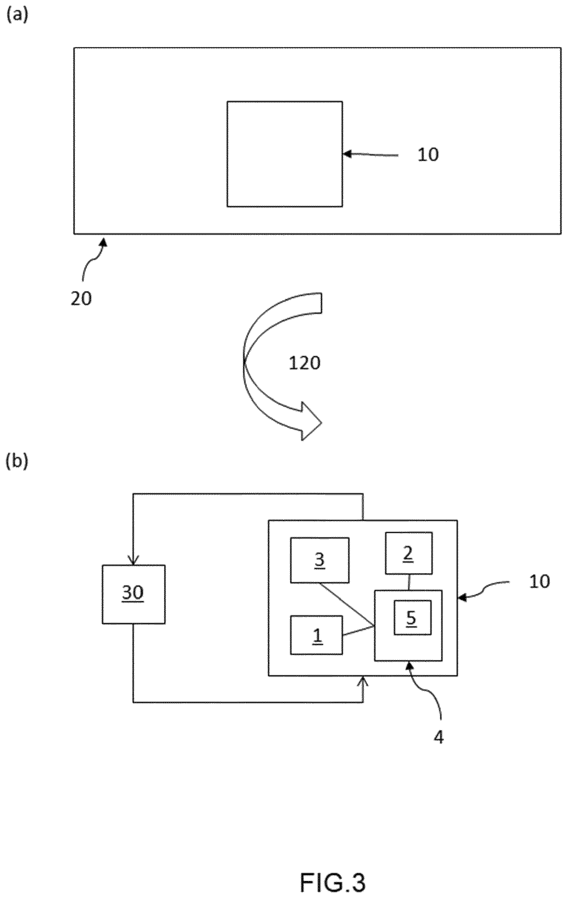

Fig. 3 zeigt eine schematische Ansicht einer Ausführungsform der erfindungsgemäßen Temperiervorrichtung 10 (a) eingebaut in eine Anlage 10, und (b) entkoppelt von der Anlage 20 zur Durchführung des Diagnoselaufs 140. In Figur 3a ist die Temperiervorrichtung 10 noch in die Anlage 20 eingebaut beziehungsweise mit der Anlage 20 verbunden. Zur Durchführung des Diagnoseverfahrens 100 wird die betreffende Temperiervorrichtung 10 von der Anlage entkoppelt 120. Die Temperiervorrichtung 10 in Figur 3b umfasst dabei ein oder mehrere erste Sensoren 1 sowie ein oder mehrere weitere Komponenten 3, die zur Sicherstellung des Betriebs der Anlage 20 mit der Temperiervorrichtung 10 vorgesehen sind, ein oder mehrere zweite Sensoren 2, die zur Messung des Zustands der Temperiervorrichtung 10 und/oder der Umgebungsbedingungen um die Temperiervorrichtung 10 herum vorgesehen sind, und eine Diagnoseeinheit 4 ausgestaltet zur Ausführung eines Diagnoseverfahrens 100 nach einem der voranstehenden Ansprüche zur Identifikation und/oder Lokalisierung von Fehlern in der Temperiervorrichtung 10. Auf der Diagnoseeinheit 4 ist hier ein Diagnoseprogramm 5 zur Ausführung des Diagnoseverfahrens 100 lauffähig installiert, wobei die Temperiervorrichtung dazu ausgestaltet ist, dass das Diagnoseprogramm 5 auf die ersten und zweiten Sensoren 1, 2 und die weitere Komponenten 3 zugreifen und in einer im Diagnoseprogramm 5 hinterlegten vorbestimmten Reihenfolge überprüfen kann, bis der Fehler in der Temperiervorrichtung 10 identifiziert und/oder lokalisiert ist. Dazu sind die ersten und zweite Sensoren sowie die weiteren Komponenten 3 zumindest mit der Diagnoseeinheit 4 geeignet verbunden. Die Temperiervorrichtung wird im laufenden Betrieb von einer Steuereinheit gesteuert. Diese Steuereinheit kann die Diagnoseeinheit 4 mit umfassen. Die zweiten Sensoren 2 umfassen hier zumindest ein oder mehrere Temperatursensoren zur Bestimmung einer Motortemperatur, einer Kühlwasserausgangs- und/oder Kühlwasserzulauftemperatur, ein oder mehrere Sensoren zur Messung einer Temperatur an einer beheizten Oberfläche, ein oder mehrere Drucksensoren zur Bestimmung eines Fülldrucks, eines Kühlwasser-Differenzialdrucks und/oder für eines Differentialdrucks am Schmutzfänger der Temperiervorrichtung 10. Die Temperiervorrichtung umfasst des Weiteren einen Medieneingang und einen Medienausgang, um von einem zu temperierenden Medium durchlaufen werden zu können.

Die in der voranstehenden Beschreibung, in den Zeichnungen sowie in den Ansprüchen offenbarten Merkmale der Erfindung können sowohl einzeln als auch in jeder beliebigen Kombination für die Verwirklichung der Erfindung in ihren verschiedenen Ausführungsformen wesentlich sein.

### Bezugszeichenliste

- 1: erste Sensoren der Temperiervorrichtung
- 2: zweite Sensoren der Temperiervorrichtung
- 3: Komponenten der Temperiervorrichtung
- 4: Diagnoseeinheit
- 5: Diagnoseprogramm
- 10: Temperiervorrichtung
- 20: Anlage mit Temperiervorrichtung(en)
- 30: definierter Verbraucher
- 100: Diagnoseverfahren zur Identifikation / Lokalisierung von Fehlern in der Temperiervorrichtung
- 110: Bestimmen der zu überprüfenden Temperiervorrichtung in der Anlage
- 120: Entkoppeln der Temperiervorrichtung von der Anlage
- 130: Anschließen der Temperiervorrichtung an einen definierten Verbraucher
- 140: Ausführen eines Diagnoselaufs für die Temperiervorrichtung
- 140a: erster Teil des Diagnoselaufs
- 140b: zweiter Teil des Diagnoselaufs
- 142: Befüllen der Temperiervorrichtung mit einem Medium
- 144: Überprüfen und/oder Kalibrierens zumindest der zweiten Sensoren, gegebenenfalls auch der ersten Sensoren
- 146: Überprüfen eines Kühlkreislaufs der Temperiervorrichtung
- 148: Überprüfen einer Heizleistung der Temperiervorrichtung
- 150: Überprüfen einer Dichtigkeit der Temperiervorrichtung
- 152: Überprüfen einer Kühlleistung der Temperiervorrichtung
- 154: Überprüfen einer Pumpenleistung der Temperiervorrichtung
- 160: Abkühlen der entkoppelten Temperiervorrichtung
- 170: Entleeren der entkoppelten Temperiervorrichtung
- 180: Reinigung alle Schmutzfilter der Temperiervorrichtung
- 190: Beheben der identifizierten und lokalisierten Fehler für die Temperiervorrichtung
- 200: Einbauen der Temperiervorrichtung in die Anlage

## Patentansprüche

1. Ein Diagnoseverfahren (100) für Temperiervorrichtungen (10) zur Temperierung von Anlagen (20) zwecks Identifikation und/oder Lokalisierung von Fehlern in einer Temperiervorrichtung, die mit ein oder mehreren ersten Sensoren (1) sowie ein oder mehreren weiteren Komponenten (3), die zur Sicherstellung des Betriebs der Anlage (20) mit der Temperiervorrichtung (10) vorgesehen sind, und mit ein oder mehreren zweiten Sensoren (2), die zur Messung des Zustands der Temperiervorrichtung (10) und/oder der Umgebungsbedingungen um die Temperiervorrichtung (10) herum vorgesehen sind, ausgestattet ist, umfassend nachfolgende Schritte:
- Bestimmen (110) der Temperiervorrichtung (10), die mit einem Diagnoselauf überprüft werden soll;
- Entkoppeln (120) der Temperiervorrichtung (10) von der Anlage (20);
- Anschließen (130) der Temperiervorrichtung (10) an einen definierten Verbraucher (30); und
- Ausführen (140) des Diagnoselaufs für die Temperiervorrichtung (10) mittels eines Diagnoseprogramms (5), wobei das Diagnoseprogramm (5) die Komponenten (3) sowie die ersten und zweiten Sensoren (1, 2) der Temperiervorrichtung (10) in einer im Diagnoseprogramm (5) hinterlegten vorbestimmten Reihenfolge überprüft, bis der Fehler in der Temperiervorrichtung (10) identifiziert und/oder lokalisiert ist.

2. Das Diagnoseverfahren (1) nach Anspruch 1, wobei der Schritt des Ausführens des Diagnoselaufs (140) den zusätzlichen Schritt des Überprüfen und/oder Kalibrierens (144) zumindest der zweiten Sensoren (2) auf ihre korrekte Funktion hin umfasst.

3. Das Diagnoseverfahren (1) nach Anspruch 2, wobei erst nach erfolgter Überprüfung und Kalibrierung (144) ein Messen von Messwerten (146, 148, 150, 152) zumindest mit den zweiten Sensoren zur Beurteilung eines Zustands der Komponenten (3) der Temperiervorrichtung (10) ausgeführt wird.

4. Das Diagnoseverfahren (1) nach Anspruch 2 oder 3, wobei die voranstehenden Schritte (144, 146, 148, 150, 152) auch für die ersten Sensoren (1) durchgeführt werden.

5. Das Diagnoseverfahren (1) nach einem der voranstehenden Ansprüche, wobei die Temperiervorrichtung von einem zu temperierenden Medium durchlaufen wird, und wobei die zweiten Sensoren (2) zumindest ein oder mehrere Temperatursensoren zur Bestimmung einer Motortemperatur, einer Kühlwasserablauf- und/oder Kühlwasserzulauftemperatur, ein oder mehrere Sensoren zur Messung einer Temperatur an einer beheizten Oberfläche, ein oder mehrere Drucksensoren zur Bestimmung eines Fülldrucks, eines Kühlwasser-Differenzialdrucks und/oder für eines Differentialdrucks am Schmutzfänger der Temperiervorrichtung (10) umfassen.

6. Das Diagnoseverfahren (1) nach einem der voranstehenden Ansprüche, wobei vor Ausführung des Diagnoselaufs (140) die Temperiervorrichtung (10) abgekühlt (160) und/oder entleert (170) wird.

7. Das Diagnoseverfahren (1) nach Anspruch 6, wobei ein erster Teil (140a) des Diagnoselaufs (140) im entleerten Zustand der Temperiervorrichtung (10) durchgeführt wird.

8. Das Diagnoseverfahren (1) nach Anspruch 7, wobei die Temperiervorrichtung von einem zu temperierenden Medium durchlaufen wird, und wobei der erster Teil (140a) eine oder mehrere Messungen oder Einstellungen von Parametern aus einer Gruppe an Parametern umfassend Temperatur, Signaldurchgang an zweite und/oder erste Sensoren (1, 2), Schalterstellungen von Schaltern und Ventilen, Kühlwasserdifferenzdruck, Befülldruck, Systemdruck vor Befüllung und/oder ungewollt einsetzender Befüllprozess in der Temperiervorrichtung (10) umfasst.

9. Das Diagnoseverfahren (1) nach einem der Ansprüche 7 oder 8, wobei ein zweiter Teil (140b) des Diagnoselaufs (140) im befüllten Zustand der Temperiervorrichtung (10) durchgeführt wird.

10. Das Diagnoseverfahren (1) nach Anspruch 9, wobei der zweite Teil (140b) des Diagnoselaufs (140) zumindest einen oder mehrere der nachfolgenden Schritte umfasst:
- Befüllen (142) der Temperiervorrichtung (10) mit einem Medium, vorzugsweise Wasser oder Öl;
- Überprüfen (146) eines Kühlkreislaufs (3) der Temperiervorrichtung (10);
- Überprüfen (148) einer Heizleistung der Temperiervorrichtung (10);
- Überprüfen (150) einer Dichtigkeit der Temperiervorrichtung (10);
- Überprüfen (152) einer Kühlleistung der Temperiervorrichtung (10);
- Überprüfen (154) einer Pumpenleistung der Temperiervorrichtung (10).

11. Das Diagnoseverfahren (1) nach Anspruch 9 oder 10, wobei der zweite Teil (140b) eine oder mehrere Messungen oder Einstellungen von Parametern aus einer Gruppe an Parametern umfassend Temperatur, Schalterstellungen von Schaltern und Ventilen, Befülldruck, Systemdruck während oder nach Befüllung, Befüllzeitdauer, Pumpenstatus, Ansteuerung Wasserwechsel, Leistung und dT-Regelung, Durchfluss, Heizleistung, Kühlleistung in der Temperiervorrichtung (10) umfasst.

12. Das Diagnoseverfahren (1) nach einem der voranstehenden Ansprüche, wobei das Anschließen (130) der Temperiervorrichtung (10) an den definierten Verbraucher (30) durch Anschließen von Ausgang und Eingang in die Temperiervorrichtung mittels eines den Ausgang und den Eingang kurzschließenden Schlauchs durchgeführt wird.

13. Das Diagnoseverfahren (1) nach einem der voranstehenden Ansprüche, wobei vor dem Anschließen (130) der Temperiervorrichtung (10) an den definierten Verbraucher (30) eine Reinigung (180) alle Schmutzfilter der Temperiervorrichtung (10) durchgeführt wird.

14. Das Diagnoseverfahren (1) nach einem der voranstehenden Ansprüche, wobei die Temperiervorrichtung (10) den Diagnoselauf automatisch nach Anschluss des definierten Verbrauchers (30) startet.

15. Das Diagnoseverfahren (1) nach einem der voranstehenden Ansprüche, umfassend die weiteren Schritte des Behebens (190) der identifizierten und lokalisierten Fehler und des Einbauens (200) der Temperiervorrichtung (10) in die Anlage (20).

16. Eine Temperiervorrichtung (10) zur Temperierung von Anlagen, umfassend
- ein oder mehrere erste Sensoren (1) sowie ein oder mehrere weitere Komponenten (3), die zur Sicherstellung des Betriebs der Anlage (20) mit der Temperiervorrichtung (10) vorgesehen sind,
- ein oder mehrere zweite Sensoren (2), die zur Messung des Zustands der Temperiervorrichtung (10) und/oder der Umgebungsbedingungen um die Temperiervorrichtung (10) herum vorgesehen sind, und
- eine Diagnoseeinheit (4), auf der ein Diagnoseprogramm (5) zur Ausführung eines Diagnoseverfahrens (100) nach einem der voranstehenden Ansprüche lauffähig installiert ist, wobei die Temperiervorrichtung (10) dazu ausgestaltet ist, dass das Diagnoseprogramm (5) auf die ersten und zweiten Sensoren (1, 2) und die weiteren Komponenten (3) zugreifen und in einer im Diagnoseprogramm (5) hinterlegten vorbestimmten Reihenfolge überprüfen kann, bis der Fehler in der Temperiervorrichtung (10) identifiziert und/oder lokalisiert ist.

17. Die Temperiervorrichtung nach Anspruch 16, **dadurch gekennzeichnet, dass** die Temperiervorrichtung einen Medieneingang und einen Medienausgang umfasst, um von einem zu temperierenden Medium durchlaufen werden zu können.

18. Die Temperiervorrichtung nach Anspruch 16 oder 17, **dadurch gekennzeichnet, dass** die zweiten Sensoren (2) zumindest ein oder mehrere Temperatursensoren zur Bestimmung einer Motortemperatur, einer Kühlwasserausgangs- und/oder Kühlwasserzulauftemperatur, ein oder mehrere Sensoren zur Messung einer Temperatur an einer beheizten Oberfläche, ein oder mehrere Drucksensoren zur Bestimmung eines Fülldrucks, eines Kühlwasser-Differenzialdrucks und/oder für eines Differentialdrucks am Schmutzfänger der Temperiervorrichtung (10) umfassen.

## Claims

1. A diagnostic method (100) for temperature regulating devices (10) for regulating the temperature of systems (20) for the purpose of identifying and/or localizing errors in a temperature regulating device, which is equipped with one or more first sensors (1) as well as one or more further components (3), which are provided to guarantee the operation of the system (20) with the temperature regulating device (10), and with one or more second sensors (2), which are provided to measure the state of the temperature regulating device (10) and/or the ambient conditions around the temperature regulating device (10), comprising the following steps:
- determining (110) the temperature regulating device (10) which is to be checked with a diagnostic procedure;
- decoupling (120) the temperature regulating device (10) from the system (20);
- connecting (130) the temperature regulating device (10) to a defined consumer (30); and
- executing (140) the diagnostic procedure for the temperature regulating device (10) by means of a diagnostic program (5), wherein the diagnostic program (5) checks the components (3) as well as the first and second sensors (1, 2) of the temperature regulating device (10) in a predetermined sequence stored in the diagnostic program (5) until the error in the temperature regulating device (10) has been identified and/or localized.

2. The diagnostic method (1) according to claim 1, wherein the step of executing the diagnostic procedure (140) comprises the additional step of checking and/or calibrating (144) at least the second sensors (2) for correct functioning.

3. The diagnostic method (1) according to claim 2, wherein, only after the checking and calibrating (144) have been completed, are the measuring values (146, 148, 150, 152) measured at least with the second sensors in order to assess a state of the components (3) of the temperature regulating device (10).

4. The diagnostic method (1) according to claim 2 or 3, wherein the preceding steps (144, 146, 148, 150, 152) are also conducted for the first sensors (1).

5. The diagnostic method (1) according to any one of the preceding claims, wherein a medium to be tempered is passed through the temperature regulating device, and wherein the second sensors (2) comprise at least one or more temperature sensors for determining an engine temperature, a cooling water drainage and/or cooling water feed temperature, one or more sensors for measuring a temperature on a heated surface, one or more pressure sensors for determining a fill pressure, a cooling water differential pressure and/or for a differential pressure on the mud guard of the temperature regulating device (10).

6. The diagnostic method (1) according to any one of the preceding claims,
wherein the temperature regulating device (10) is cooled down (160) and/or emptied (170) prior to execution of the diagnostic procedure (140).

7. The diagnostic method (1) according to claim 6, wherein a first part (140a) of the diagnostic procedure (140) is conducted in the emptied state of the temperature regulating device (10).

8. The diagnostic method (1) according to claim 7, wherein a medium to be tempered is passed through the temperature regulating device, and wherein the first part (140a) comprises one or more measurements or settings of parameters from a group of parameters comprising temperature, signal throughput to second and/or first sensors (1, 2), switch positions of switches and valves, cooling water differential pressure, filling pressure, system pressure before filling and/or undesired starting of the filling process in the temperature regulating device (10).

9. The diagnostic method (1) according to any one of claims 7 or 8, wherein a second part (140b) of the diagnostic procedure (140) is conducted in the filled state of the temperature regulating device (10).

10. The diagnostic method (1) according to claim 9, wherein the second part (140b) of the diagnostic procedure (140) comprises at least one or more of the following steps:
- filling (142) the temperature regulating device (10) with a medium, preferably water or oil;
- checking (146) a cooling circuit (3) of the temperature regulating device (10);
- checking (148) a heating power of the temperature regulating device (10);
- checking (150) a tightness of the temperature regulating device (10);
- checking (152) a cooling power of the temperature regulating device (10);
- checking (154) a pumping power of the temperature regulating device (10).

11. The diagnostic method (1) according to claim 9 or 10, wherein the second part (140b) comprises one or more measurements or settings of parameters from a group of parameters comprising temperature, switch positions of switches and valves, filling pressure, system pressure during or after filling, filling duration, pump status, actuation of water change, capacity and dT-regulation, flow, heating power, and cooling power in the temperature regulating device (10).

12. The diagnostic method (1) according to any one of the preceding claims, wherein the connecting (130) of the temperature regulating device (10) to the defined consumer (30) is conducted by connecting an outlet and an inlet into the temperature regulating device by means of a hose that short-circuits the outlet and the inlet.

13. The diagnostic method (1) according to any one of the preceding claims,
wherein, prior to connecting (130) the temperature regulating device (10) to the defined consumer (30), a cleaning (180) of all dirt filters of the temperature regulating device (10) is conducted.

14. The diagnostic method (1) according to any one of the preceding claims,
wherein the temperature regulating device (10) automatically starts the diagnostic procedure after connection of the defined consumer (30).

15. The diagnostic method (1) according to any one of the preceding claims, comprising the further steps of rectifying (190) the identified and localized errors and installing (200) the temperature regulating device (10) in the system (20).

16. A temperature regulating device (10) for regulating the temperature of systems, comprising
- one or more first sensors (1) as well as one or more further components (3), which are provided to guarantee the operation of the system (20) with the temperature regulating device (10),
- one or more second sensors (2), which are provided to measure the state of the temperature regulating device (10) and/or the ambient conditions around the temperature regulating device (10), and
- a diagnostic unit (4), on which a diagnostic program (5) is installed ready for executing a diagnostic method (100) according to any one of the preceding claims, wherein the temperature regulating device (10) is configured such that the diagnostic program (5) can access and check the first and second sensors (1, 2) and the further components (3) in a predetermined sequence stored in the diagnostic program (5) until the error in the temperature regulating device (10) has been identified and/or localized.

17. The temperature regulating device according to claim 16, **characterized in that** the temperature regulating device comprises a media inlet and a media outlet so that a medium to be tempered can pass through.

18. The temperature regulating device according to claim 16 or 17, **characterized in that** the second sensors (2) comprise at least one or more temperature sensors for determining an engine temperature, a cooling water output and/or cooling water feed temperature, one or more sensors for measuring a temperature on a heated surface, one or more pressure sensors for determining a fill pressure, a cooling water differential pressure and/or for a differential pressure on the mud guard of the temperature regulating device (10).

## Revendications

1. Procédé de diagnostic (100) pour dispositifs de mise en température (10) pour mettre en température des installations (20) en vue de l'identification et/ou de la localisation d'erreurs dans un dispositif de mise en température, lequel est équipé d'un ou de plusieurs premiers capteurs (1) ainsi que d'un ou de plusieurs composants (3) supplémentaires, lesquels sont prévus pour assurer le fonctionnement de l'installation (20) avec le dispositif de mise en température (10), et sont équipés d'un ou de plusieurs deuxièmes capteurs (2), lesquels sont prévus pour la mesure de l'état du dispositif de mise en température (10) et/ou des conditions ambiantes autour du dispositif de mise en température (10), comprenant les étapes suivantes :
- détermination (110) du dispositif de mise en température (10), lequel doit être vérifié par une procédure de diagnostic ;
- découplage (120) du dispositif de mise en température (10) de l'installation (20) ;
- connexion (130) du dispositif de mise en température (10) à un consommateur défini (30) ; et
- exécution (140) de la procédure de diagnostic pour le dispositif de mise en température (10) au moyen d'un programme de diagnostic (5), le programme de diagnostic (5) vérifiant les composants (3) ainsi que les premiers et deuxièmes capteurs (1, 2) du dispositif de mise en température (10) dans un ordre prédéfini enregistré dans le programme de diagnostic (5), jusqu'à ce que l'erreur dans le dispositif de mise en température (10) soit identifiée et/ou localisée.

2. Procédé de diagnostic (1) selon la revendication 1, l'étape d'exécution de la procédure de diagnostic (140) comprenant l'étape supplémentaire de la vérification et/ou du calibrage (144) au moins des deuxièmes capteurs (2), relativement à leur fonctionnement correct.

3. Procédé de diagnostic (1) selon la revendication 2, une mesure de valeurs de mesure (146, 148, 150, 152) étant effectuée au moins avec les deuxièmes capteurs pour l'évaluation d'un état des composants (3) du dispositif de mise en température (10) uniquement après exécution de la vérification et du calibrage (144).

4. Procédé de diagnostic (1) selon la revendication 2 ou 3, les étapes précédentes (144, 146, 148, 150, 152) étant également exécutées pour les premiers capteurs (1).

5. Procédé de diagnostic (1) selon l'une des revendications précédentes, le dispositif de mise en température étant traversé par un milieu devant être mis en température, et les deuxièmes capteurs (2) comprenant au moins un ou plusieurs capteurs de température pour la détermination d'une température de moteur, d'une température d'évacuation d'eau de refroidissement et/ou d'une température d'arrivée d'eau de refroidissement, un ou plusieurs capteurs pour la mesure d'une température sur une surface chauffée, un ou plusieurs capteurs de pression pour la détermination d'une pression de remplissage, d'une pression différentielle d'eau de refroidissement et/ou pour une pression différentielle sur le séparateur d'impuretés du dispositif de mise en température (10).

6. Procédé de diagnostic (1) selon l'une des revendications précédentes, le dispositif de mise en température (10) étant refroidi (160) et/ou vidé (170) avant l'exécution de la procédure de diagnostic (140).

7. Procédé de diagnostic (1) selon la revendication 6, une première partie (140a) de la procédure de diagnostic (140) étant exécutée avec dispositif de mise en température (10) à l'état vidé.

8. Procédé de diagnostic (1) selon la revendication 7, le dispositif de mise en température étant traversé par un milieu devant être mis en température, et la première partie (140a) comprenant une ou plusieurs mesures ou un ou plusieurs réglages de paramètres parmi un groupe de paramètres comprenant la température, le passage de signal aux deuxièmes et/ou aux premiers capteurs (1, 2), des positions de commutateurs et de vannes, la pression différentielle d'eau de refroidissement, la pression de remplissage, la pression de système avant remplissage et/ou le processus de remplissage démarrant de façon involontaire dans le dispositif de mise en température (10).

9. Procédé de diagnostic (1) selon l'une des revendications 7 ou 8, une deuxième partie (140b) de la procédure de diagnostic (140) étant exécutée avec dispositif de mise en température (10) à l'état rempli.

10. Procédé de diagnostic (1) selon la revendication 9, la deuxième partie (140b) de la procédure de diagnostic (140) comprenant au moins une ou plusieurs des étapes suivantes :
- remplissage (142) du dispositif de mise en température (10) avec un milieu, de préférence de l'eau ou de l'huile ;
- vérification (146) d'un circuit de refroidissement (3) du dispositif de mise en température (10) ;
- vérification (148) d'une puissance de chauffage du dispositif de mise en température (10) ;
- vérification (150) d'une étanchéité du dispositif de mise en température (10) ;
- vérification (152) d'une puissance de refroidissement du dispositif de mise en température (10) ;
- vérification (154) d'une puissance de pompage du dispositif de mise en température (10).

11. Procédé de diagnostic (1) selon la revendication 9 ou 10, la deuxième partie (140b) comprenant une ou plusieurs mesures ou un ou plusieurs réglages de paramètres parmi un groupe de paramètres comprenant la température, des positions de commutateurs et de vannes, la pression de remplissage, la pression de système pendant ou après remplissage, la durée de remplissage, l'état des pompes, la commande du changement d'eau, la puissance et la régulation dT, le débit, la puissance de chauffage, la puissance de refroidissement dans le dispositif de mise en température (10).

12. Procédé de diagnostic (1) selon l'une des revendications précédentes, la connexion (130) du dispositif de mise en température (10) sur le consommateur (30) défini étant effectuée à l'aide d'un tuyau court-circuitant la sortie et l'entrée par connexion de la sortie et de l'entrée dans le dispositif de mise en température.

13. Procédé de diagnostic (1) selon l'une des revendications précédentes, un nettoyage (180) de tous les filtres d'impuretés du dispositif de mise en température (10) étant effectué avant la connexion (130) du dispositif de mise en température (10) au consommateur (30) défini.

14. Procédé de diagnostic (1) selon l'une des revendications précédentes, le dispositif de mise en température (10) démarrant la procédure de diagnostic automatiquement après connexion du consommateur (30) défini.

15. Procédé de diagnostic (1) selon l'une des revendications précédentes, comprenant les étapes supplémentaires de l'élimination (190) des erreurs identifiées et localisées et du montage (200) du dispositif de mise en température (10) dans l'installation (20).

16. Dispositif de mise en température (10) pour mettre en température des installations, comprenant
- un ou plusieurs premiers capteurs (1) ainsi qu'un ou plusieurs composants (3) supplémentaires, lesquels sont prévus pour assurer le fonctionnement de l'installation (20) avec le dispositif de mise en température (10),
- un ou plusieurs deuxièmes capteurs (2), lesquels sont prévus pour la mesure de l'état du dispositif de mise en température (10) et/ou des conditions ambiantes autour du dispositif de mise en température (10), et
- une unité de diagnostic (4) sur laquelle un programme de diagnostic (5) est installé de façon exécutable pour l'exécution d'un procédé de diagnostic (100) selon l'une des revendications précédentes, le dispositif de mise en température (10) étant adapté pour que le programme de diagnostic (5) puisse accéder aux premiers et deuxièmes capteurs (1, 2) et aux composants (3) supplémentaires et puisse les vérifier dans un ordre prédéterminé enregistré dans le programme de diagnostic (5), jusqu'à ce que l'erreur soit identifiée et/ou localisée dans le dispositif de mise en température (10).

17. Dispositif de mise en température selon la revendication 16, **caractérisé en ce que** le dispositif de mise en température comprend une entrée de milieu et une sortie de milieu, afin de pouvoir être traversé par un milieu devant être tempéré.

18. Dispositif de mise en température selon la revendication 16 ou 17, **caractérisé en ce que** les deuxièmes capteurs (2) comprennent au moins un ou plusieurs capteurs de température pour la détermination d'une température de moteur, d'une température d'évacuation d'eau de refroidissement et/ou d'une température d'arrivée d'eau de refroidissement, un ou plusieurs capteurs pour la mesure d'une température sur une surface chauffée, un ou plusieurs capteurs de pression pour la détermination d'une pression de remplissage, d'une pression différentielle d'eau de refroidissement et/ou pour une pression différentielle sur le séparateur d'impuretés du dispositif de mise en température (10).
